# EUROPÄISCHE PATENTSCHRIFT

(11) **EP 1 726 430 B1**
(45) Veröffentlichungstag und Bekanntmachung des Hinweises auf die Patenterteilung: **23.07.2014**
(21) Anmeldenummer: 06009599.9
(22) Anmeldetag: 10.05.2006
(51) Int. Cl.: B30B 5/06, B27N 3/24, B65G 21/20, B65G 39/20

(54) **Kontinuierliche Presse**
Continuous press
Presse continue

(30) Priorität: 25.05.2005 DE 102005024065
(43) Veröffentlichungstag der Anmeldung: 29.11.2006
(73) Patentinhaber: Siempelkamp Maschinen- und Anlagenbau GmbH & Co.KG, 47803 Krefeld (DE)
(72) Erfinder: Vogel, Michael, 47807 Krefeld (DE); Sebastian, Lothar, 47239 Duisburg (DE)
(74) Vertreter: von dem Borne, Andreas

(56) Entgegenhaltungen:
- DE-C1- 19 812 443
- DE-C2- 3 152 911
- US-A- 3 101 475
- US-A- 4 480 978
- US-A- 4 613 293

## Beschreibung

Die Erfindung betrifft eine kontinuierliche Presse zum Verpressen von Pressgutmatten zu Pressgutplatten, insbesondere Spanplatten, Faserplatten oder dergleichen Holzwerkstoffplatten, mit Pressenunterteil und Pressenoberteil, im Pressenunterteil und Pressenoberteil endlos umlaufenden Stahlpressbändern, und mit einem Einlaufmaul,
wobei im Pressenunterteil und im Pressenoberteil beheizbare Pressenplatten angeordnet sind und sich an die Pressenplatten einlaufseitig vorkragende beheizbare Einlaufplatten unter Bildung des Einlaufmauls anschließen,
wobei die Stahlpressbänder an den Pressplatten und Einlaufplatten unter Zwischenschaltung von Rollstäben abgestützt sind, welche mittels einer oberen und unteren Rollstabumlaufeinrichtung über vorgegebene Umlaufbahnen geführt sind und im Bereich des Einlaufmauls zwischen den Stahlpressbändern und den Einlaufplatten einlaufen,
wobei die Rollstabumlaufeinrichtungen Umlenkräder und im Bereich des Einlaufmauls Rollstabeinführungsräder aufweisen und die Rollstäbe mittels über die Umlenkräder und Rollstabeinführungsräder umlaufender Rollstabketten mit Stabausgleichsspiel geführt sind,
wobei die Rollstabeinführungsräder als Zahnräder mit Zahnlücken zum Eingreifen und Mitnehmen der Rollstäbe ausgebildet sind,
wobei die Rollstabketten und Rollstäbe mit einer Neigung abwärts gegen die Rollstabeinführungsräder umlaufen und in die Zahnlücken der Rollstabeinführungsräder einfädeln und vor den oberen und/oder unteren Rollstabeinführungsrädern (unter Bildung eines Rollstabmagazins) ein Gleitboden für die Rollstäbe angeordnet ist.

Bei derartigen Pressen sind die Rollstabketten regelmäßig als Laschenketten mit Kettenbolzen, Verbindungslaschen und ggf. äußeren Laufrollen auf den Kettenbolzen ausgebildet. An diese Laschenketten sind die Rollstäbe, welche stirnseitige Bohrungen und darin eingesetzte, mit den Laschenketten verbundene Lagerbolzen aufweisen können, mit einem Stabausgleichsspiel angeschlossen.

Der Gleitboden ist mit einem die Selbsthemmung übersteigenden Neigungswinkel gegen die betreffenden Rollstabeinführungsräder im Wesentlichen tangential angestellt. Gleitboden bedeutet dabei, dass die Rollstäbe vor dem Eintritt in die Zahnlücken der zugeordneten Rollstabeinführungsräder auf dem Gleitboden aufliegen und in tangentialer Ausrichtung gegen die Rollstabeinführungsräder in deren Umlaufrichtung abgleiten und ggf. auch abrollen können. Infolge der Auflage der Rollstäbe auf dem Gleitboden und ihres Stabausgleichsspiels sowie ggf. des Kettenbolzenausgleichspiels wird einerseits ein Durchhängen und folglich Durchbiegen der Rollstäbe vermieden, wird andererseits ein Magazineffekt erreicht. Folglich bleiben die Rollstäbe gerade, so dass ein Einfädeln in die Zahnlücken des Rollstabeinführungsrades ohne jeden Teilungssprung gewährleistet ist, also stets die einander zugeordneten Zahnlücken der jeweils beiden synchron umlaufenden Rollstabeinführungsräder einen Rollstab aufnehmen und die Rollstäbe teilungsgerecht in die einander zugeordneten Zahnlücken derart einfädeln werden, dass sämtliche aufeinander folgenden Zahnlücken mit Rollstäben belegt werden. Da ferner stets eine hinreichende Anzahl von Rollstäben in dem Rollstabmagazin zur Verfügung steht, welche gegen die Rollstabeinführungsräder abgleiten bzw. rollen, wird eine sichere Einfädelung der Rollstäbe in die zugehörigen Zahnlücken der Rollstabeinführungsräder erreicht. Aus der sicheren Einfädelung und dem Magazineffekt resultiert darüber hinaus die Möglichkeit einer schnellen Einfädelung, zumal die Rollstabeinführungsräder mit ihren Zahnlücken in das Rollstabmagazin im Zuge der Einfädelung der Rollstäbe gleichsam eintauchen und die dort befindlichen und ausgerichteten Rollstäbe nacheinander mitnehmen. Insoweit gelingt eine einwandfreie Ausrichtung sowie sichere und schnelle Einfädelung der Rollstäbe unter Verzicht auf zusätzliche Ausrichtketten, wobei mit verhältnismäßig hohen Pressgeschwindigkeiten gearbeitet werden kann.

Ein kontinuierliche Presse der eingangs beschriebenen Art ist aus der DE 198 12 443 C1 bekannt. Die insoweit bekannten Maßnahmen mit Gleitboden haben sich in der Praxis bewährt. Sie sind jedoch weiterentwicklungsfähig. Insbesondere besteht bei sehr hohen Pressgeschwindigkeiten grundsätzlich die Gefahr, dass die regelmäßig flexibel ausgebildeten Rollstäbe aufgrund von Fliehkräften im Zuge des Stangenumlaufs abheben, so dass Störungen, die beispielsweise durch ein Überspringen der Rollstäbe auftreten könnten, nicht vollständig ausgeschlossen sind. Hier setzt die Erfindung ein.

Der Erfindung liegt die Aufgabe zugrunde, eine kontinuierliche Presse der eingangs beschriebenen Ausführungsform zu schaffen, bei welcher eine einwandfreie Ausrichtung sowie sichere und schnelle Einfädelung der Rollstäbe in die Rollstabeinführungsräder selbst bei höchsten Pressgeschwindigkeiten gewährleistet ist.

Diese Aufgabe löst die Erfindung bei einer Presse gemäß Anspruch 1. Gegenüberliegend meint hier, dass die Anlaufabdeckung auf der dem Gleitboden abgewandten Seite der Rollstangen angeordnet ist, so dass der (untere) Gleitboden und die (obere) Führungsabdeckung einen Einlauftunnel bzw. Führungstunnel für die Rollstangen bilden. Es wird folglich nicht nur der bereits beschriebene Magazineffekt erreicht, welcher ein optimales Einfädeln gewährleistet, sondern durch die zusätzlich vorgesehene Führungs- bzw. Anlaufabdeckung wird außerdem zuverlässig ein Abheben bzw. Überspringen der Rollstäbe aufgrund von Fliehkräften bei sehr hohen Geschwindigkeiten vermieden. Die Rollstäbe werden im Übergangsbereich zwischen Umlenkrädern und Rollstabeinführungsrädern gleichsam zwangsgeführt.

Dabei ist es zweckmäßig, wenn sich die Führungsabdeckung zumindest bis zu dem Rollstabablaufbereich der betreffenden Umlenkräder erstreckt. Besonders bevorzugt ist eine Ausführungsform, bei der sich die Führungsabdeckung um ein vorgegebenes Maß über den Rollstabablaufbereich der betreffenden Umlenkräder hinaus erstreckt. So kann es zweckmäßig sein, sowohl den Gleitboden als auch die Führungsabdeckung bis nahezu in den Bereich des Höchstpunktes der Umlenkräder zu führen.

Durch eine besonders einfache und kostengünstige Konstruktion zeichnet sich eine bevorzugte Weiterbildung der Erfindung aus, bei welcher die Führungsabdeckung von mehreren Führungsstegen bzw. Führungskufen gebildet wird. Die Führungsstege bzw. Führungskufen bilden insoweit Gegenkufen, die dem Gleitboden zugeordnet sind. Dabei kann es zweckmäßig sein, wenn auch der Gleitboden selbst aus mehreren Gleitstegen bzw. Gleitkufen ausgebildet ist, wobei die Gleitkufen einerseits und die Gegenkufen andererseits vorzugsweise in Achsrichtung versetzt zueinander angeordnet sind.

Nach einem weiteren Vorschlag der Erfindung ist vorgesehen, dass im Einlaufbereich der ersten Umlenkräder ein erster Umlenkboden für die Rollstäbe angeordnet ist, der bis in den Umlauf der Umlenkräder geführt ist. Durch diesen im Bereich der Umlenkräder vorgesehenen Führungsboden wird zusätzlich eine einwandfreie Führung der Rollstangen im Bereich der Umlenkräder und insbesondere im Einlaufbereich der Umlenkräder gewährleistet, so dass auch in diesem Bereich ein Überspringen nacheinander angeordneter Rollstangen zuverlässig verhindert wird.

Bei an sich bekannten Ausführungsformen, bei denen den ersten Umlenkrädern zweite Umlenkräder unter Bildung eines weiteren S-förmigen Umlaufs vorgeordnet sind, schlägt die Erfindung vor, dass im Einlaufbereich dieser zweiten Umlenkräder ein zweiter Umlenkboden bzw. Führungsboden angeordnet ist. Folglich wird auch bei solchen Ausführungsformen, bei denen zweite Umlenkräder unterhalb der ersten Umlenkräder angeordnet sind, eine einwandfreie Führung der Rollstangen im Bereich dieser zweiten Umlenkräder gewährleistet.

Dabei liegt es im Rahmen der Erfindung, dass der erste Umlenkboden bzw. Führungsboden von mehreren Umlenkstegen bzw. Führungskufen gebildet wird. Alternativ oder auch ergänzend kann der zweite Umlenkboden bzw. Führungsboden im Bereich der zweiten Umlenkräder von mehreren Umlenkstegen bzw. Führungskufen gebildet werden.

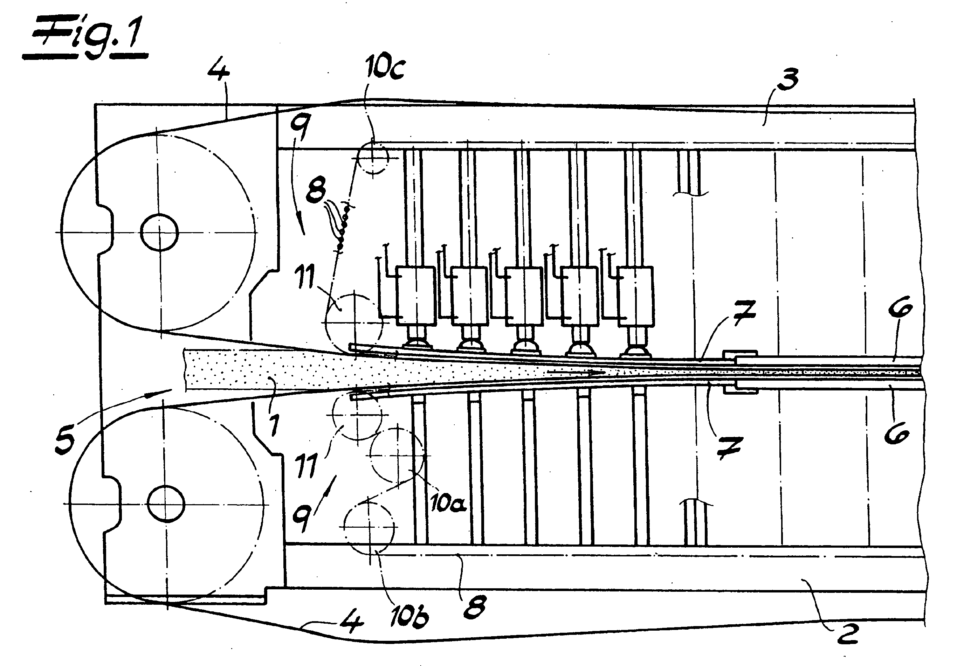

Im Folgenden wird die Erfindung anhand einer lediglich ein Ausführungsbeispiel darstellenden Zeichnung näher erläutert. Es zeigen
- Fig. 1: eine erfindungsgemäße kontinuierlich arbeitende Presse ausschnittsweise in schematischer Seitenansicht,
- Fig. 2: einen vergrößerten Ausschnitt aus dem Gegenstand nach Fig. 1 im Bereich der unteren Rollstabeinführungsräder,
- Fig. 3: eine vereinfachte Ansicht X auf den Gegenstand nach Fig. 2,

- Fig. 4: eine vereinfachte Ansicht Y auf den Gegenstand nach Fig. 2,
- Fig. 5: eine vereinfachte Ansicht Z auf den Gegenstand nach Fig. 2,
- Fig. 6: einen vergrößerten Ausschnitt aus dem Gegenstand nach Fig. 1 im Bereich der oberen Rollstabeinführungsräder,
- Fig. 7: eine vereinfachte Ansicht Z' auf den Gegenstand nach Fig. 6.

In den Figuren ist eine kontinuierliche Presse zum Verpressen von Pressgutmatten 1 zu Pressgutplatten im Zuge der Herstellung von Spanplatten, Faserplatten oder dergleichen Holzwerkstoffplatten dargestellt, die in ihrem grundsätzlichen Aufbau ein Pressenunterteil 2 und ein Pressenoberteil 3 sowie im Pressenunterteil 2 und Pressenoberteil 3 endlos umlaufenden Stahlpressbändern 4 sowie ein Einlaufmaul 5 aufweist. Im Pressenunterteil 2 und Pressenoberteil 3 sind beheizbare Pressenplatten 6 angeordnet, an die sich einlaufseitig vorkragende beheizbare Einlaufplatten 7 unter Bildung des Einlaufmauls anschließen. Es ist erkennbar, dass es sich im Ausführungsbeispiel um separate Einlaufplatten 7 handelt, die hochbiegeelastisch ausgebildet sein können und an welche spezielle Zylinderkolbenanordnungen zur Einstellung einer optimalen Einlaufkontur angeschlossen sind. Die Erfindung umfasst aber auch Ausführungsformen, bei denen das Einlaufmauls von den Pressplatten gebildet wird, so dass die Einlaufplatten dann gleichsam Bestandteil der Pressplatten sind.

Die Stahlpressbänder 4 sind an den Pressplatten 6 und Einlaufplatten 7 unter Zwischenschaltung von Rollstabteppichen abgestützt. Die Rollstabteppiche sind aus kalibrierten Rollstäben 8 gebildet, die lückenlos die gesamte Pressplatten- bzw. Einlaufplattenbreite überdecken. Im Pressbereich werden Sie über einen Rolleffekt von den Stahlpressbändern 4 vorwärts bewegt. Die Rollstäbe 8 sind mittels einer oberen und unteren Rollstabumlaufeinrichtung 9 über vorgegebene Umlaufbahnen geführt und laufen im Bereich des Einlaufmauls 5 zwischen den Stahlpressbändern 4 und den Einlaufplatten 7 ein. Die untere Rollstabumlaufeinrichtung 9 weist Umlenkräder 10a, b und im Bereich des Einlaufmauls 5 angetriebene und parallel zueinander angeordnete Rollstabeinführungsräder 11 auf. Die obere Rollstabumlaufeinrichtung 9 weist Umlenkräder 10c und im Bereich des Einlaufmauls 5 parallel zueinander angeordnete und angetriebene Rollstabeinführungsräder 11 auf. Die Rollstäbe 8 sind mittels über die Umlenkräder 10a, b, c und Rollstabeinführungsräder 11 umlaufender Rollstabketten 12 mit Stabausgleichsspiel geführt. Bei den Rollstabketten 12 handelt es sich um Laschenketten mit Kettenbolzen und Verbindungslaschen unter Verwirklichung eines Kettenbolzenausgleichsspiels, was im Einzelnen nicht dargestellt ist. Die Arbeitsrichtung der Presse ist in den Figuren jeweils durch einen Pfeil angedeutet.

Die Rollstabeinführungsräder 11 sind als Zahnräder 11 mit Zahnlücken zum Eingreifen und Mitnehmen der Rollstäbe 8 ausgebildet. Die Rollstabketten 12 und Rollstäbe 8 laufen mit einer Neigung abwärts gegen die Rollstabeinführungsräder 11 um und fädeln in die Zahnlücken der Rollstabeinführungsräder 11 ein.

Vor den unteren Rollstabeinführungsrädern 11 ist unter Bildung eines Rollstabmagazins M ein Gleitboden 13 für die Rollstäbe angeordnet. Der Gleitboden 13 ist mit einem die Selbsthemmung übersteigenden Neigungswinkel α gegen die betreffenden Rollstabeinführungsräder 11 tangential angestellt, so dass die Rollstäbe 8 auf dem Gleitboden 13 gegen die zugeordneten Rollstabeinführungsräder 11 abgleiten und ggf. abrollen. Der Neigungswinkel α des Gleitbodens 13 beträgt im Ausführungsbeispiel 20 bis 50, z. B. 30 bis 40, vorzugsweise 35 °.

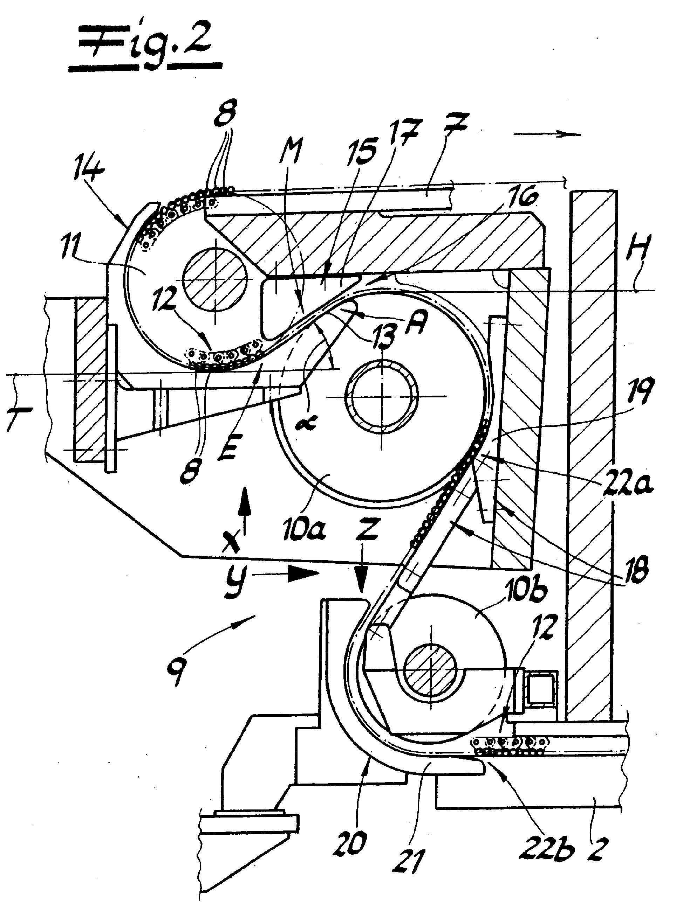

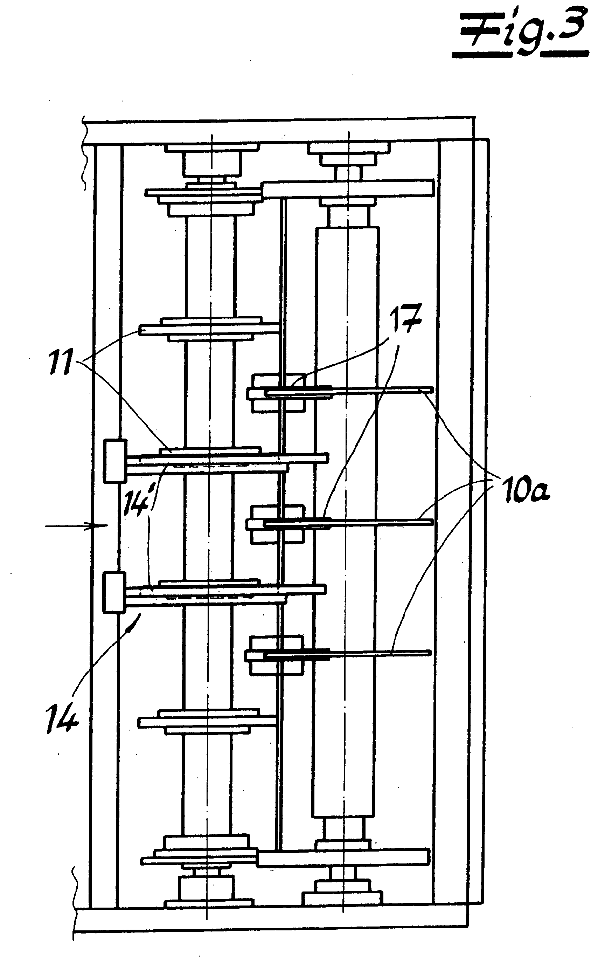

Insbesondere in Fig. 2 ist erkennbar, dass erfindungsgemäß vor den unteren Rollstabeinführungszahnrädern 11 nicht nur ein Gleitboden 13, sondern darüber hinaus eine dem Gleitboden gegenüberliegende Führungsabdeckung 15 unter Bildung eines Einlauftunnels 16 angeordnet ist. Den Rollstabeinführungsrädern 11 sind erste Umlenkräder 10a unter Bildung einer S-förmigen Umlaufbahn für die Rollstabketten 12 und Rollstäbe 8 vorgeordnet, deren Höchstpunkt H im Bereich der Umlenkräder 10a den Tiefstpunkt T im Bereich der Rollstabeinführungsräder 11 übersteigt. Der Gleitboden 13 erstreckt sich zumindest bis zu dem Rollstabablaufbereich A der Umlenkräder oder darüber hinaus und ist über den Rollstabeinfädelbereich E der Rollstabeinführungsräder hinausgeführt. Der Gleitboden 13 ist dabei Bestandteil einer die betreffenden Rollstabeinführungsräder 11 bis in den Bereich des zugeordneten Stahlpressbandes 4 umgebenden Rollstababdeckung 14. Die Führungsabdeckung 15 erstreckt sich ebenfalls um ein vorgegebenes Maß über den Rollstabablaufbereich der betreffenden Umlenkräder 10a hinaus. In Fig. 2 ist erkennbar, dass sich Gleitboden 13 einerseits und Anlaufabdeckung 15 andererseits um etwa das gleiche Maß bis in den Bereich der Umlenkräder erstrecken, nämlich bis in die Nähe des Höchsten H der ersten Umlenkräder 10a. Der Gleitboden 14 wird von mehreren Gleitstegen 14' gebildet. Dazu wird auf Fig. 3 verwiesen. Dort ist erkennbar, dass - abgesehen von den äußeren Kettenführungsrädern - vier Rollstabeinführungsräder 11 vorgesehen sind. Ferner ist erkennbar, dass im Ausführungsbeispiel der Gleitboden aus zwei Gleitstegen 14' besteht, welche den mittleren Rollstabeinführungsrädern 11 zugeordnet sind. Gleitstege 14' einerseits und die mittleren Rollstabeinführungsräder 11 andererseits sind dabei fluchtend angeordnet (vgl. Fig. 3).

Die Führungs- bzw. Anlaufabdeckung 15 wird von mehreren über die Rollstangenlänge verteilten und im Wesentlichen parallel zueinander angeordneten Führungsstegen 17 gebildet, die auch als Gegenkufen 17 bezeichnet werden können. Dabei ist es zweckmäßig, wenn über die Rollstablänge in axialer Richtung 2 bis 6, z. B. 3 oder 4 Führungsstege 17 verteilt sind, die äquidistant oder auch mit unterschiedlichen Abständen zueinander angeordnet sein können. Im Ausführungsbeispiel nach Fig. 3 sind drei Führungsstege 17 vorgesehen. Ferner ist in Fig. 3 erkennbar, dass - abgesehen von den äußeren Kettenführungsrädern - drei erste Umlenkräder bzw. Umlenkscheiben 10a vorgesehen sind, wobei diesen ersten Umlenkrädern 10a Führungsstege 17 zugeordnet sind. Folglich sind die Führungsstege 17 den ersten Umlenkrädern 10a in der Darstellung nach Fig. 3 fluchtend zugeordnet. Damit ergibt sich, dass die Führungsstege 17 versetzt zu den Gleitstegen 14' angeordnet sind, da auch die ersten Umlenkräder 10a versetzt zu den Rollstabeinführungsrädern 11 positioniert sind (vgl. Fig. 3).

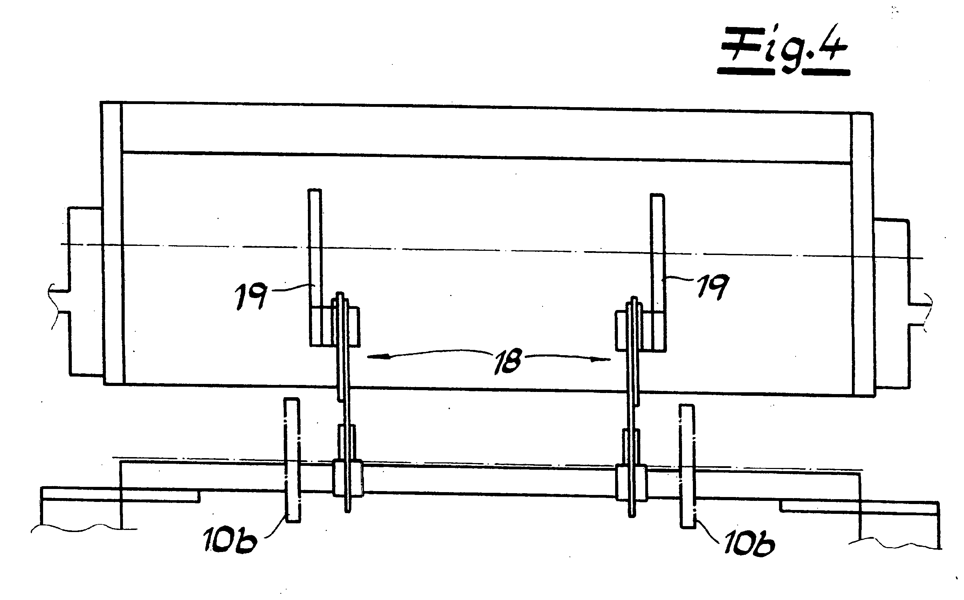

Ferner ist in Fig. 2 angedeutet, dass im Bereich der ersten Umlenkräder 10a ein erster Umlenk- bzw. Führungsboden 18 für die Rollstäbe angeordnet ist, der bis in den Umlauf der Umlenkräder 10a geführt ist. Auch dieser Führungsboden 18 wird von mehreren Führungsstegen 19, z. B. zwei Führungsstegen gebildet. Dazu wird auf Fig. 4 verwiesen. Der Führungsboden 18 kragt entgegen der Stangenlaufrichtung um ein vorgegebenes Maß über den Einlaufbereich 22a der Umlenkräder 10a hinaus vor, so dass die Rollstangen 8 störungsfrei in den Bereich der ersten Umlenkräder 10a auf den Umlenkstegen 19 eingeführt werden.

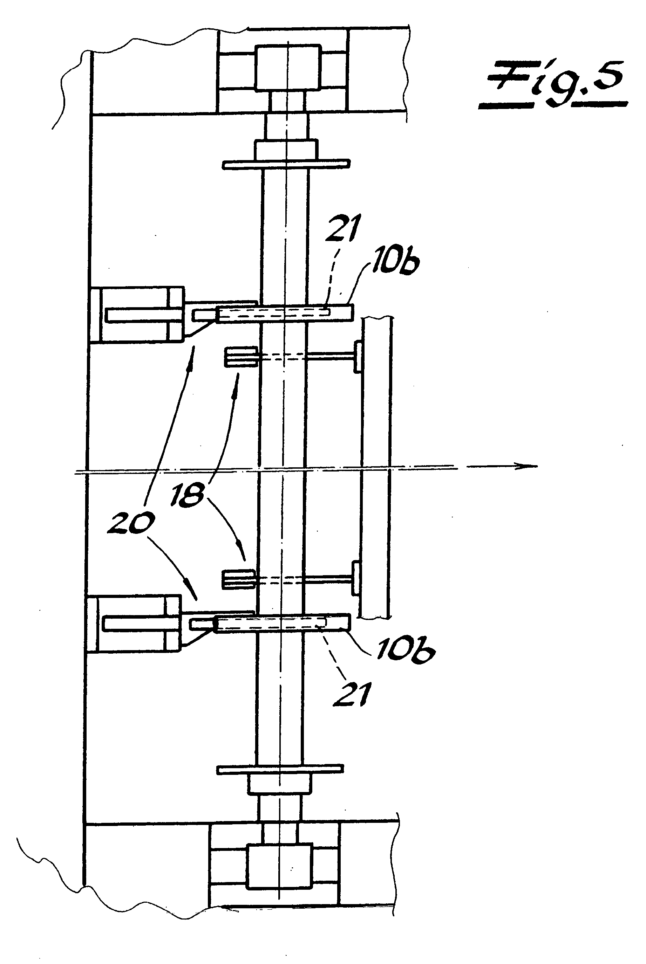

Den ersten Umlenkrädern 10a sind zweite Umlenkräder 10b unter Bildung eines weiteren S-förmigen Umlaufes vorgeordnet. In Fig. 2 ist erkennbar, dass die zweiten Umlenkräder 10b in etwa unterhalb der ersten Umlenkräder 10a angeordnet sind. Im Einlaufbereich 22b dieser zweiten Umlenkräder 10b ist ein zweiter Umlenk- bzw. Führungsboden 20 angeordnet, der bis in den Umlauf der zweiten Umlenkräder 10b geführt ist. Es ist erkennbar, dass dieser zweite Führungsboden 20 als Rollstababdeckung die zweiten Umlenkräder 10b über einen Umlaufwinkel von etwa 90° umschließt. Dabei wird auch der zweite Führungsboden 20 von mehreren Führungsstegen bzw. Führungskufen 21 gebildet. Dazu wird auf Fig. 5 verwiesen. Es ist erkennbar, dass der Führungsboden 20 von zwei Führungsstegen 21 gebildet wird. Diese beiden Führungsstege 21 sind den beiden zweiten Umlenkrädern 10b zugeordnet. In Fig. 5 ist angedeutet, dass die Führungsstege 21 fluchtend zu den zweiten Umlenkrädern 10b positioniert sind.

Im Rahmen der Erfindung besteht die Möglichkeit, mit Pressengeschwindigkeiten von 1.500 mm/sek. und mehr zu arbeiten.

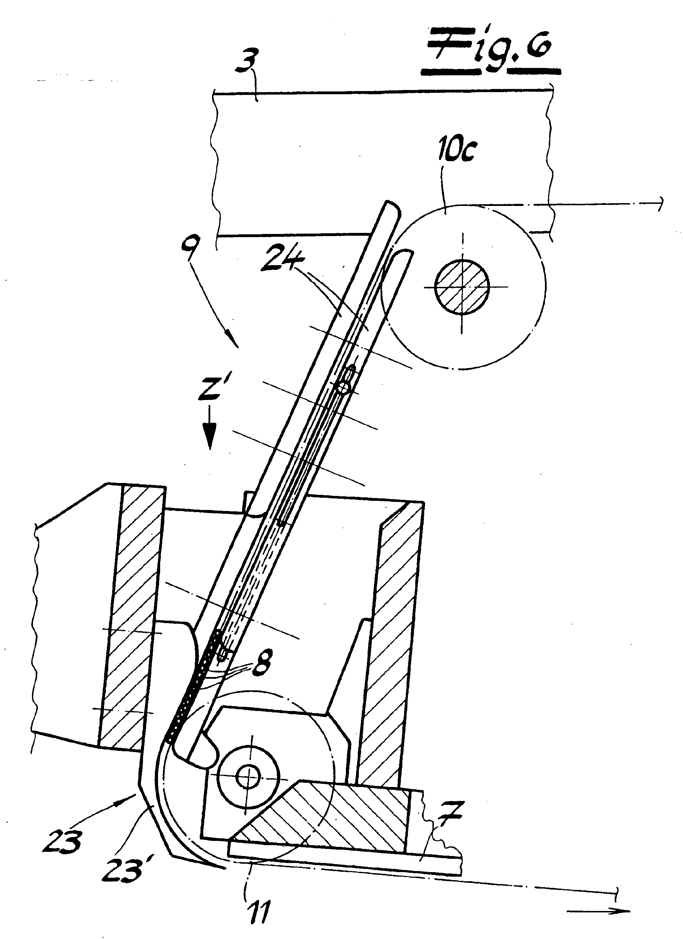

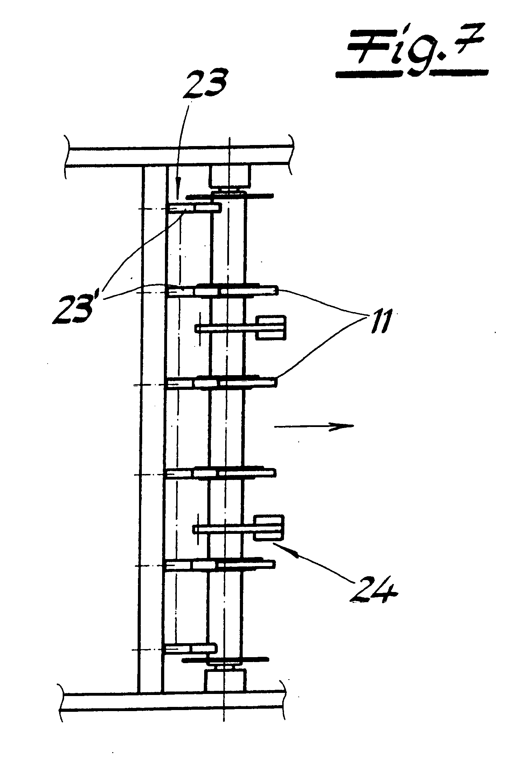

Die Fig. 6 und 7 zeigen die erfindungsgemäße Presse im Bereich der oberen Rollstabeinführungsräder. Es ist erkennbar, dass den oberen Rollstabeinführungsrädern 11 ebenfalls ein Führungsboden bzw. eine Führungsabdeckung 23 zugeordnet ist, welche aus mehreren Führungsstegen 23' besteht. Ferner ist in den Fig. 6 und 7 angedeutet, dass den Rollstabeinführungsrädern 11 Führungsschienen 24 für die Rollstangen vorgeordnet sind, d. h. die Führungsschienen 24 sind im wesentlichen oberhalb der Rollstabeinführungsräder 11 beidseitig der Rollstäbe angeordnet und bilden folglich einen Führungstunnel. Dabei handelt es sich um Führungsschienen mit Längenausgleich.

## Patentansprüche

1. Kontinuierliche Presse zum Verpressen von Pressgutmatten (1) zu Pressgutplatten, mit Pressenunterteil (2) und Pressenoberteil (3), im Pressenunterteil (2) und Pressenoberteil (3) endlos umlaufenden Stahlpressbändem (4), und mit einem Einlaufmaul (5),
wobei im Pressenunterteil (2) und im Pressenoberteil (3) beheizbare Pressenplatten (6) angeordnet sind und sich an die Pressenplatten (6) einlaufseitig vorkragende beheizbare Einlaufplatten (7) unter Bildung des Einlaufmauls (5) anschließen,
wobei die Stahlpressbänder (4) an den Pressplatten (6) und Einlaufplatten (7) unter Zwischenschaltung von Rollstäben (8) abgestützt sind, welche mittels einer oberen und unteren Rollstabumlaufeinrichtung (9) über Umlaufbahnen geführt sind und im Bereich des Einlaufmauls (5) zwischen den Stahlpressbändem (4) und den Einlaufplatten (7) einlaufen,
wobei die Rollstabumlaufeinrichtungen (9) Umlenkräder (10a, 10b) und im Bereich des Einlaufmauls (5) Rollstabeinführungsräder (11) aufweisen und die Rollstäbe (8) mittels über die Umlenkräder (10a, 10b) und Rollstabeinführungsräder (11) umlaufender Rollstabketten (12) mit Stabausgleichsspiel geführt sind,
wobei die Rollstabeinführungsräder (11) als Zahnräder mit Zahnlücken zum Eingreifen und Mitnehmen der Rollstäbe (8) ausgebildet sind,
wobei die Rollstabketten (12) und Rollstäbe (8) mit einer Neigung abwärts gegen die unteren Rollstabeinführungsräder (11) umlaufen und in die Zahnlücken der Rolistabeinführungsräder (11) einfädeln und vor den unteren Rollstabeinführungsrädem (11) ein Gleitboden (13) für die Rollstäbe (8) angeordnet ist,
**dadurch gekennzeichnet,**
**dass** vor den unteren Roiistabeinführungsrädem (11) zumindest eine dem Gleitboden (13) gegenüberliegende Führungsabdeckung (15) unter Bildung eines Einlauftunnels (16) angeordnet ist.

2. Presse nach Anspruch 1, wobei den betreffenden Rollstabeinführungsrädern (11) erste Umlenkräder (10a) unter Bildung einer S-förmigen Umlaufbahn für die Rollstabketten (12) und Rollstäbe (8) vorgeordnet sind, wobei sich der Gleitboden (13) zumindest bis zu dem Rollstabablaufbereich der betreffenden Umlenkräder (10a) erstreckt, **dadurch gekennzeichnet, dass** sich die Führungsabdeckung (15) zumindest bis zu dem Rollstabablaufbereich der betreffenden Umlenkräder (10a) erstreckt.

3. Presse nach Anspruch 2, **dadurch gekennzeichnet, dass** sich die Führungsabdeckung (15) über den Rollstabablaufbereich der betreffenden Umlenkräder (10a) hinaus erstreckt.

4. Presse nach einem der Ansprüche 1 bis 3, **dadurch gekennzeichnet, dass** die Führungsabdeckung (15) von mehreren Führungsstegen (17) gebildet wird.

5. Presse nach einem der Ansprüche 1 bis 4, **dadurch gekennzeichnet, dass** im Einlaufbereich der ersten Umlenkräder (10a) ein erster Umlenkboden (18) für die Rollstäbe (8) angeordnet ist, der bis in den Umlauf der Umlenkräder (10a) geführt ist.

6. Presse nach einem der Ansprüche 1 bis 5, wobei den ersten Umlenkrädern (10a) zweite Umlenkräder (10b) unter Bildung eines S-förmigen Umlaufs vorgeordnet sind, **dadurch gekennzeichnet, dass** im Einlaufbereich der zweiten Umlenkräder (10b) ein zweiter Umlenkboden (20) angeordnet ist, der bis in den Umlauf der zweiten Umlenkräder (10b) geführt ist.

7. Presse nach einem der Ansprüche 5 bis 7, **dadurch gekennzeichnet, dass** der erste Umlenkboden (18) und/oder der zweite Umlenkboden (20) jeweils von mehreren Umlenkstegen (19 bzw. 21) gebildet wird.

8. Presse nach einem der Ansprüche 1 bis 7, **dadurch gekennzeichnet, dass** den oberen Rollstabeinführungsrädern (11) zumindest eine den Rollstabeinführungsrädern (11) gegenüberliegende obere Führungsabdeckung (23) zugeordnet ist.

## Claims

1. A continuous press for compressing press material mats (1) into pressed material boards, with a lower press part (2) and an upper press part (3), with steel pressing belts (4) that endlessly revolve in the lower press part (2) and the upper press part (3), and with an inlet mouth (5),
wherein heatable press plates (6) are arranged in the lower press part (2) and in the upper press part (3) and protruding heatable inlet plates (7) adjoin the press plates (6) on the inlet side such that the inlet mouth (5) is formed,
wherein the steel pressing belts (4) are supported on the press plates (6) and the inlet plates (7) via intermediately arranged rolling rods (8) that are guided on circulating paths by means of an upper and a lower rolling rod circulating device (9) and in the region of the inlet mouth (5) run in between the steel pressing belts (4) and the inlet plates (7),
wherein the rolling rod circulating devices (9) feature deflection pulleys (10a, 10b) and, in the region of the inlet mouth (5), rolling rod inserting wheels (11) and the rolling rods (8) are guided with rod compensation play by means of rolling rod chains (12) that revolve over the deflection pulleys (10a, 10b) and the rolling rod inserting wheels (11),
wherein the rolling rod inserting wheels (11) are realized in the form of toothed wheels with gashes for engaging with and driving the rolling rods (8),
wherein the rolling rod chains (12) and the rolling rods (8) revolve with a downward incline relative to the lower rolling rod inserting wheels (11) and thread into the gashes of the rolling rod inserting wheels (11), and wherein a sliding bottom (13) for the rolling rods (8) is arranged upstream of the lower rolling rod inserting wheels (11),
**characterized in**
**that** at least one guide cover (15) lying opposite of the sliding bottom (13) is arranged upstream of the lower rolling rod inserting wheels (11) such that an inlet tunnel (16) is formed.

2. The press according to Claim 1, wherein first deflection pulleys (10a) are arranged upstream of the rolling rod inserting wheels (11) in question such that an S-shaped circulating path for the rolling rod chains (12) and the rolling rods (8) is formed, and wherein the sliding bottom (13) extends at least as far as the rolling rod disengaging region of the deflection pulleys (10a) in question, **characterized in that** the guide cover (15) extends at least as far as the rolling rod disengaging region of the deflection pulleys (10a) in question.

3. The press according to Claim 2, **characterized in that** the guide cover (15) extends beyond the rolling rod disengaging region of the deflection pulleys (10a) in question.

4. The press according to one of Claims 1 to 3, **characterized in that** the guide cover (15) is composed of several guide webs (17).

5. The press according to one of Claims 1 to 4, **characterized in that** a first deflection bottom (18) for the rolling rods (8), which extends as far as the circulating path of the deflection pulleys (10a), is arranged in the inlet region of the first deflection pulleys (10a).

6. The press according to one of Claims 1 to 5, wherein second deflection pulleys (10b) are arranged upstream of the first deflection pulleys (10a) such that an S-shaped circulating path is formed, **characterized in that** a second deflection bottom (20), which extends as far as the circulating path of the second deflection pulleys (10b), is arranged in the inlet region of the second deflection pulleys (10b).

7. The press according to one of Claims 5 to 7, **characterized in that** the first deflection bottom (18) and/or the second deflection bottom (20) is respectively composed of several deflection webs (19 and 21).

8. The press according to one of Claims 1 to 7, **characterized in that** at least one upper guide cover (23) lying opposite of the rolling rod inserting wheels (11) is assigned to the upper rolling rod inserting wheels (11).

## Revendications

1. Presse continue pour compacter des nattes de produits comprimés (1) en panneaux de produits comprimés, avec une partie inférieure (2) de presse et une partie supérieure (3) de presse, avec des courroies de presse (4) en acier en rotation continue dans la partie inférieure (2) de presse et la partie supérieure (3) de presse, et avec un avaloir (5),
dans la partie inférieure (2) de presse et dans la partie supérieure (3) de presse étant placées des plaques de presse (6) chauffantes et des plaques d'introduction (7) chauffantes saillant côté entrée, qui se raccordent sur les plaques de presse (6) en formant l'avaloir (5),
les courroies de presse (4) en acier s'appuyant sur les plaques de presse (6) et sur les plaques d'introduction (7) par l'intermédiaire de barrettes roulantes (8), qui au moyen d'un système orbital (9) supérieur et inférieur pour barrettes roulantes sont guidées sur des trajectoires orbitales et dans la zone de l'avaloir (5) s'introduisent entre les courroies de presse (4) en acier et les plaques d'introduction (7),
les systèmes orbitaux (9) pour barrettes roulantes comportant des roues de renvoi (10a, 10b) et dans la zone de l'avaloir (5), des roues d'introduction (11) de barrettes roulantes et les barrettes roulantes (8) étant guidées avec un jeu de compensation des barrettes au moyen de chaînes (12) pour barrettes roulantes, en rotation autour des roues de renvoi (10a, 10b) et des roues d'introduction (11) des barrettes roulantes,
les roues d'introduction (11) des barrettes roulantes étant conçues en tant que roues dentées avec des entredents pour l'engagement et l'entraînement des barrettes roulantes (8),
les chaînes (12) pour barrettes roulantes et les barrettes roulantes (8) étant rotatives avec une inclinaison descendante contre les roues d'introduction (11) inférieures des barrettes roulantes et s'enfilant dans les entredents des roues d'introduction (11) des barrettes roulantes et un fond de glissement (13) pour les barrettes roulantes (8) étant placé à l'avant des roues d'introduction (11) inférieures des barrettes roulantes,
**caractérisée en ce qu'**au moins un recouvrement de guidage (15) opposé au fond de glissement (13) est placé à l'avant des roues d'introduction (11) inférieures des barrettes roulantes, en formant un tunnel d'introduction (16).

2. Presse selon la revendication 1, des premières roues de renvoi (10a) en formant une trajectoire orbitale en forme de S pour les chaînes (12) pour barrettes roulantes, et des barrettes roulantes (8) étant placées en amont des roues d'introduction (1) des barrettes roulantes concernées, le fond de glissement (13) s'étendant au moins jusqu'à la zone de déroulement des barrettes roulantes des roues de renvoi (10a) concernées, **caractérisée en ce que** le recouvrement de guidage (15) s'étend au moins jusqu'à la zone de déroulement des barrettes roulantes des roues de renvoi (10a) concernées.

3. Presse selon la revendication 2, **caractérisée en ce que** le recouvrement de guidage (15) s'étend au-delà de la zone de déroulement des barrettes roulantes des roues de renvoi (10a) concernées.

4. Presse selon l'une quelconque des revendications 1 à 3, **caractérisée en ce que** le recouvrement de guidage (15) est formé par plusieurs listels de guidage (17).

5. Presse selon l'une quelconque des revendications 1 à 4, **caractérisée en ce que** dans la zone d'introduction des premières roues de renvoi (10a) est placé un premier fond de renvoi (18) pour les barrettes roulantes (8) qui est guidé jusque dans la rotation des roues de renvoi (10a).

6. Presse selon l'une quelconque des revendications 1 à 5, en amont des premières roues de renvoi (10a) des deuxièmes roues de renvoi (10b) étant placées en formant une orbite en forme de S, **caractérisée en ce que** dans la zone d'introduction des deuxièmes roues de renvoi (10b) est placé un deuxième fond de renvoi (20) qui est guidé jusque dans la rotation des deuxièmes roues de renvoi (10b).

7. Presse selon l'une quelconque des revendications 5 à 7, **caractérisée en ce que** le premier fond de renvoi (18) et/ou le deuxième fond de renvoi (20) sont formés chacun par plusieurs listels de renvoi (19 ou 21 ).

8. Presse selon l'une quelconque des revendications 1 à 7, **caractérisée en ce qu'**aux roues d'introduction (11) supérieures des baguettes roulantes est associé au moins un recouvrement de guidage (23) supérieur opposé aux roues d'introduction (11) des baguettes roulantes.
